# EUROPÄISCHE PATENTSCHRIFT

(11) **EP 1 234 990 B1**
(45) Veröffentlichungstag und Bekanntmachung des Hinweises auf die Patenterteilung: **06.12.2006**
(21) Anmeldenummer: 02003885.7
(22) Anmeldetag: 21.02.2002
(51) Int. Cl.: F16D 1/08

(54) **Schalenkupplung zur drehfesten Verbindung von Wellen**
Split muff coupling for rotatibly connecting shafts
Accouplement à coquilles pour coupler des arbres en rotation

(30) Priorität: 21.02.2001 DE 10108362
(43) Veröffentlichungstag der Anmeldung: 28.08.2002
(73) Patentinhaber: WILO AG, 44263 Dortmund (DE)
(72) Erfinder: Jäkel, Detlev, 44369 Dortmund (DE); Tolstoj, Aleksej, 44287 Dortmund (DE)
(74) Vertreter: COHAUSZ DAWIDOWICZ HANNIG & SOZIEN

(56) Entgegenhaltungen:
- CH-A- 253 550
- DE-A- 19 816 543
- US-A- 5 580 184
- US-A- 5 980 225

## Beschreibung

Die Erfindung betrifft eine Schalenkupplung zur drehfesten Verbindung von zwei fluchtenden Wellen, insbesondere einer Pumpenwelle mit einer Motorwelle, umfassend zwei die beiden Wellenenden, die auch ohne Endflansch ausgebildet sein können, jeweils teilweise umschließende Kupplungsschalen mit je zwei Trennflächen, die im montierten Zustand paarweise den Trennflächen der jeweils anderen Kupplungsschale unter Bildung eines Trennspaltes in einem Abstand gegenüberliegen, wobei die beiden Kupplungsschalen derart gegeneinander verspannt sind, dass die beiden Wellenenden kraftschlüssig an innenseitigen Kupplungsflächen der Kupplungsschalen gehalten sind.

Eine derartige Schalenkupplung ist aus der US-A-5 980 225 bekannt.

Die Erfindung betrifft ferner ein Verfahren zum Montieren einer derartigen Schalenkupplung.

Derartige Schalenkupplungen sind allgemein bekannt. Sie werden als drehstarre, nicht schaltbare Kupplungen eingesetzt, um Drehmomente zwischen miteinander fluchtend gelagerten Wellen zu übertragen.

Darüber hinaus sind auch andersartige Wellenkupplungen mit zwei halbkreisförmigen Kupplungssegmenten bekannt. So offenbart beispielsweise die DE 40 00 231 A1 eine Wellenkupplung, die bei Wellenenden mit einem Endflansch eingesetzt werden kann. Hier wird das Drehmoment jedoch nicht kraftschlüssig, sondern mittels einer Keilanordnung übertragen. Zur Abdichtung des Raumes zwischen den beiden Kupplungssegmenten kann dabei auch eine Dichtung in dem Trennspalt vorgesehen sein.

Aus der JP 2000170781 A ist ferner eine Wellenkupplung bekannt, die nicht aus zwei getrennten Kupplungsschalen mit je zwei Trennflächen besteht. Diese Wellenkupplung besteht im wesentlichen nur aus einem einstückigen Hohlzylinderelement, das an einer Seite in Längsrichtung einen Trennungsschlitz aufweist und das daher elastisch federnd aufgebogen und gegen zwei Wellenenden verspannt werden kann. Um die Bearbeitung der innenseitigen Kupplungsfläche und insbesondere das Aufbringen der Kupplung auf die miteinander zu verbindenden Wellenenden zu vereinfachen, ist vor der Montage eine Scheibe in dem Trennungsschlitz angeordnet, die nach dem Aufbringen auf die Wellen und vor dem Festpannen der Kupplung entfernt wird.

Schalenkupplungen der eingangs genannten Art sind im allgemeinen relativ kleinbauende Kupplungen, die einfach zu lösen bzw. zu demontieren sind.

Demgegenüber gestaltet sich die Montage relativ aufwendig, da beim Verspannen der Schalenkupplung sorgfältig darauf geachtet werden muss, dass die beiden Kupplungsschalen nicht in einer verkanteten bzw. schiefen Lage montiert werden. Eine nicht exakt ausgerichtete Positionierung bzw. eine Verkantung der beiden Kupplungsschalen kann unmittelbar oder nach einer bestimmten Betriebszeit durch Setzen der Spannelemente zu einer Reduzierung oder Aufhebung der reibschlüssigen Kraftübertragung führen, so dass eine Drehmomentübertragung und insbesondere auch ein axialer Kraftschluß einer angetriebenen Welle nicht mehr mit der erforderlichen Sicherheit erfolgen kann.

Auch können bei einer schiefen Montage der beiden Kupplungsschalen hohe Unwuchtkräfte beim Betrieb auftreten, wodurch die Lager der Wellen übermäßig beansprucht und weitere Folgeschäden hervorgerufen werden können. Insbesondere im Bereich von Pumpen müssen die Pumpenlaufräder exakt ausgewuchtet sein, wobei schon kleinste Unwuchten an der Wellenkupplung sich stark bemerkbar machen und große Nachteile hervorrufen können.

Aufgabe der vorliegenden Erfindung ist es daher, eine konstruktiv einfache und preiswert herzustellende Schalenkupplung der eingangs genannten Art zu schaffen, die schnell und einfach mit einer großen Genauigkeit montierbar ist und somit dauerhaft eine sichere Drehmomentübertragung durch einen sicheren Kraftschluß gewährleistet.

Diese Aufgabe wird erfindungsgemäß durch eine Schalenkupplung nach Anspruch 1 gelöst. Wesentlich ist dabei, dass in beiden Trennspalten jeweils mindestens eine Distanzscheibe aus Kunststoff zwischen den beiden Trennflächen eingefügt ist, dessen Dicke zumindest annähernd gleich der Dicke des Trennspaltes ist. Diese Distanzelemente bleiben auch nach der erfolgten Montage, also während des Betriebes der Kupplung in den Trennspalten.

Der Hauptvorteil besteht dabei darin, dass ein Verkanten bzw. eine zueinander schiefe Montage der beiden Kupplungsschalen aufgrund der zwischengelegten Distanzelemente sicher verhindert wird. Daher kann die zulässige Flächenpressung der Trennflächen der Kupplungsschalen nicht überschritten werden, so daß Setzerscheinungen der Trennflächen und ein damit verbundenes Lockern der Spannelemente nicht auftreten kann. Auf diese Weise wird ein Abbau der Kupplungsspannkraft und somit eine Verringerung oder sogar ein Verlust des übertragbaren Drehmoments sowie weitere Folgeschäden sicher verhindert.

Auch werden Unwuchterscheinungen sicher vermieden, so daß auf einfache Weise ein besonders gleichmäßiger Rundlauf der Wellen und damit verbundener rotierender Elemente, insbesondere Pumpenlaufräder erreicht werden kann.

Insgesamt ist die erfindungsgemäße Schalenkupplung somit nicht nur einfach zu lösen, sondern auch besonders einfach und schnell in besonders betriebssicherer Art und Weise zu montieren.

Aufgrund der einfachen Konstruktionsweise kann die erfindungsgemäße Schalenkupplung dabei kostengünstig hergestellt werden.

Besonders vorteilhaft ist es, wenn die Dicke der Distanzelemente um einen Betrag von 0,1 bis 0,8 mm größer ist, als die Dicke des Trennspaltes, wobei die Distanzelemente in montiertem Zustand der Kupplung um diesen Betrag zusammengedrückt sind. Aber auch, wenn die Dicke der Distanzelemente gleich oder geringfügig kleiner als die Dicke des Trennspaltes ist, kann ein Verkanten der beiden Kupplungsscheiben bei der Montage der Kupplung verhindert werden.

Vorzugsweise können die Distanzelemente als Distanzscheiben in Form einer relativ dünnen Platte ausgeführt sein. Wenn die beiden Kupplungsschalen mittels Schrauben miteinander verspannt werden, ist es dabei besonders günstig, wenn die Distanzscheiben ringförmig ausgeführt und jeweils um eine Schraube herum gelegt sind. Dadurch sind die Distanzscheiben auf besonders einfache Weise in ihrer Position im Trennspalt fixiert.

Vorzugsweise wird hierbei vorgeschlagen, die beiden Kupplungsschalen über insgesamt vier Schrauben gegeneinander zu verspannen, wobei an den Trennspalten jeweils zwei Schrauben angeordnet sind und in jedem Trennspalt jeweils nur eine Distanzscheibe vorgesehen ist. Auf diese Weise kann schon bei geringem Materialaufwand bzw. Teileeinsatz ein Verkanten der Kupplungsschalen verhindert werden.

Falls beide Wellen unterschiedliche Durchmesser aufweisen, wird weiterhin vorgeschlagen, die Distanzelemente nur im Bereich der Welle mit dem kleineren Durchmesser anzuordnen, bzw. die Distanzscheiben nur um die beiden Schrauben anzuordnen, die im Bereich der Welle mit dem kleineren Durchmesser vorgesehen sind.

Besonders vorteilhaft ist es, wenn die Distanzscheibe aus einem Kunststoff, vorzugsweise aus Polyethylen gefertigt ist. Wesentlich ist dabei, daß es sich um einen Kunststoff handelt, dessen Härte ausreichend für einen spürbaren Widerstand beim Zusammenschrauben der beiden Kupplungsschalen ist, und die gleichzeitig gering genug ist, um die Spannkräfte nicht wesentlich abzubauen.

Bevorzugt sind bei einer Schalenkupplung der eingangs genannten Art an mindestens einer Welle Mittel zur formschlüssigen axialen Lagesicherung der Welle in der Schalenkupplung vorgesehen. Diese Mittel sind dabei üblicherweise durch einen Stift gebildet, der in jeweils eine Bohrung in der Welle bzw. in der Innenseite einer Kupplungsschale eingreift. Auch hierbei wäre es wünschenswert, die Montage der Schalenkupplung zu vereinfachen.

Hierzu schlägt die Erfindung vor, dass die Mittel zur formschlüssigen axialen Lagesicherung durch einen Ring gebildet sind, der teilweise in einer Ringnut in der Mantelfläche der Welle und teilweise in einer Ringnut in den innenseitigen Kupplungsflächen der Kupplungsschalen einliegt. Der wesentliche Vorteil besteht dabei darin, dass die rotatorische Positionierung der Welle relativ zur Kupplungsschale beliebig ist. Im Gegensatz zu einem Stift kann der Ring nicht nur in einer einzigen relativen Winkelpositionierung, sondern in jeder rotatorischen Relativpositionierung montiert werden.

Außerdem kann hierdurch die Fertigung erheblich vereinfacht werden. Sowohl bei den Kupplungsschalen als auch bei der Welle ist ein zusätzlicher Fertigungsschritt zum Einbringen der Bohrung nicht erforderlich. Vielmehr kann die benötigte Ringnut im Anschluß an die Drehbearbeitung besonders schnell und einfach in der gleichen Einspannung der jeweiligen Werkstücke vorgenommen werden. Dadurch werden bei einfacher Montierbarkeit auch die Fertigungskosten deutlich reduziert.

Eine besonders einfache Montierbarkeit kann dabei dadurch erreicht werden, dass der Ring ein Sprengring ist, der federnd in der Ringnut der Welle gehalten ist.

Ein besonders vorteilhaftes Verfahren zum Montieren einer derartigen Schalenkupplung zur drehfesten Verbindung von zwei fluchtenden Wellen umfaßt die folgenden Montageschritte: Die beiden Wellenenden werden in eine erste Kupplungsschale eingebracht. Die zweite Kupplungsschale wird gegenüberliegend zu der ersten Kupplungsschale auf die beiden Wellenenden derart aufgebracht, daß jeweils die zwei Trennflächen der beiden Kupplungsschalen einander paarweise unter Bildung jeweils eines Trennspaltes in einem Abstand gegenüberliegen. In die beiden Trennspalte wird jeweils mindestens ein Distanzelement eingefügt, dessen Dicke zumindest annähernd gleich der Dicke des Trennspaltes ist. Die zweite Kupplungsschale wird mittels Befestigungsmitteln gegen die erste Kupplungsschale derart verspannt, daß die beiden Wellenenden kraftschlüssig an den innenseitigen Kupplungsflächen der Kupplungsschalen gehalten sind.

Wesentlich bei diesem erfindungsgemäßen Verfahren ist es insbesondere, daß die beiden Distanzelemente während und auch nach der erfolgten Montage und während des Betriebs der Kupplung in dem Trennspalt verbleiben.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: Dreidimensionale Ansicht einer erfindungsgemäßen Schalenkupplung mit einer Welle und
- Figur 2:: Stirnansicht der Schalenkupplung aus Richtung A in Figur 1.

Die in den Figuren dargestellte Schalenkupplung 1 umfasst zwei Kupplungsschalen 2, die in an sich bekannter Weise die beiden drehfest miteinander zu verbindenden Wellen 3 kraftschlüssig zwischen sich aufnehmen, wobei in den Figuren lediglich eine Welle 3 dargestellt ist, die einen geringeren Durchmesser aufweist, als die in den Zeichnungen nicht dargestellte zweite Welle. Die beiden Kupplungsschalen 2 sind im montierten Zustand durch vier nicht näher dargestellte Schrauben gegeneinander verspannt, die durch vier in jeder Kupplungsschale 2 vorgesehene und in einer senkrecht zur Wellenachse angeordneten Ebene verlaufende Bohrungen 4 eingesetzt sind.

Die Enden der Wellen 3 sind dabei kraftschlüssig an den innenseitigen Kupplungsflächen 5 der Kupplungsschalen 2 verspannt. Im montierten Zustand ist aufeinander diametral gegenüberliegenden Seiten der Welle jeweils ein Trennspalt 6 der Dicke S zwischen den paarweise einander gegenüberliegenden Trennflächen 7 der beiden Kupplungsschalen 2 ausgebildet.

Um die Montierbarkeit der Schalenkupplung 1 zu vereinfachen und ein Verkanten der beiden Kupplungsschalen 2 sicher zu verhindern, das bei einem Setzvorgang der Schrauben aufgrund zu hoher Flächenpressungen zu einem Lösen der Schalenkupplung 1 führen könnte, sind erfindungsgemäß zwei Distanzscheiben 8 in dem Trennspalt 6 angeordnet, deren Dicke vor der Montage der Schalenkupplung 1 um 0,1 mm dicker ist, als die Dicke S des Trennspaltes 6. Bei der Montage der Schalenkupplung 1 werden die Distanzscheiben 8 um 0,1 mm zusammengedrückt, so dass ein einwandfreier Kraftschluß zwischen den Kupplungsflächen 5 und den Enden der Wellen 3 gegeben ist. Die Distanzscheiben 8 verhindern dabei auf einfache und zuverlässige Weise ein Anziehen der Schrauben bei einer schiefen Positionierung der Kupplungsschalen 2.

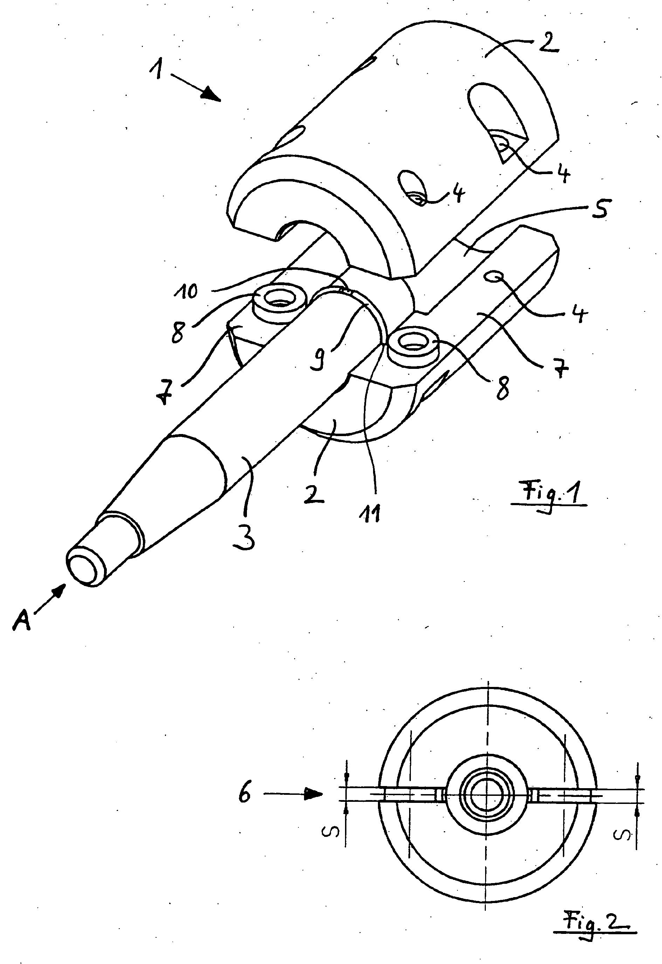

Die aus Polyethylen bestehenden Distanzscheiben 8 sind ringförmig ausgebildet und nur um die beiden Schrauben herumgelegt, die im in Figur 1 vorne liegenden Bereich der Welle 3 mit geringerem Durchmesser angeordnet sind. Bereits durch diese beiden Distanzscheiben 8 kann ein Verkanten der beiden Kupplungsschalen 2 sicher verhindert werden. Insbesondere bei größeren Schalenkupplungen 1, die ggf. auch mit mehr als vier Schrauben montiert werden, können jedoch auch mehrere Distanzscheiben 8 zum Einsatz kommen.

Um die Welle 3 sowohl bei der Montage als auch zusätzlich bei montierter Schalenkupplung 1 in ihrer axialen Positionierung zu sichern, ist ein Sprengring 9 vorgesehen, der federnd in einer im Endbereich der Welle 3 angeordneten Ringnut 10 einliegt. Dabei liegt der Sprengring 9 in radialer Richtung nur teilweise in der Ringnut 10 der Welle 3 ein, so dass er radial nach außen über die Mantelfläche der Welle 3 hervorsteht. Mit diesem vorstehenden Bereich liegt der Sprengring 9 in einer innenseitigen Ringnut 11 ein, die in der entsprechenden Kupplungsfläche 5 der beiden Kupplungsschalen 2 ausgebildet ist. Sowohl die Ringnut 10 als auch die Ringnut 11 können auf fertigungstechnisch besonders einfache Weise und somit besonders kostengünstig bei der Drehbearbeitung der Welle 3 bzw. der Kupplungsschalen 2 eingebracht werden. Außerdem wird durch den Sprengring 9 eine axiale Lagesicherung der Welle 3 relativ zur Schalenkupplung 1 geschaffen, die besonders einfach zu montieren ist.

## Patentansprüche

1. Schalenkupplung zur drehfesten Verbindung von zwei fluchtenden Wellen, insbesondere einer Pumpenwelle mit einer Motorwelle, umfassend zwei die beiden Wellenenden jeweils teilweise umschließende Kupplungsschalen (2) mit je zwei Trennflächen, die im montierten Zustand paarweise den Trennflächen der jeweils anderen Kupplungsschale unter Bildung eines Trennspaltes in einem Abstand gegenüberliegen, wobei die beiden Kupplungsschalen derart gegeneinander verspannt sind, daß die beiden Wellenenden kraftschlüssig an innenseitigen Kupplungsflächen der Kupplungsschalen gehalten sind,
**dadurch gekennzeichnet,**
**daß** in beiden Trennspalten (6) jeweils mindestens eine Distanzscheibe (8) aus Kunststoff zwischen den beiden Trennflächen (7) eingefügt ist, dessen Dicke zumindest annähernd gleich der Dicke (S) des Trennspaltes (6) ist.

2. Schalenkupplung nach Anspruch 1, **dadurch gekennzeichnet, daß** die Dicke der Distanzscheibe (8) um einen Betrag von 0,1 bis 0,8 Millimeter größer ist, als die Dicke (S) des Trennspaltes (6), und daß die Distanzscheibe (8) im montierten Zustand der Kupplung (1) um diesen Betrag zusammengedrückt ist.

3. Schalenkupplung nach Anspruch 1 oder 2, **dadurch gekennzeichnet, daß** die beiden Kupplungsschalen (2) mittels Schrauben gegeneinander verspannbar sind, wobei die Distanzscheiben (8) ringförmig ausgeführt und jeweils um eine Schraube herumgelegt sind.

4. Schalenkupplung nach Anspruch 3, **dadurch gekennzeichnet, daß** die beiden Kupplungsschalen (2) über insgesamt vier Schrauben gegeneinander verspannbar sind, wobei an den Trennspalten (6) jeweils zwei Schrauben angeodnet sind und in jedem Trennspalt (6) jeweils nur eine Distanzscheibe (8) vorgesehen ist.

5. Schalenkupplung nach einem der vorherigen Ansprüche, **dadurch gekennzeichnet, daß** die beiden Wellen (3) unterschiedliche Durchmesser aufweisen und die Distanzscheiben (8) nur im Bereich der Welle (3) mit dem kleineren Durchmesser angeordnet sind.

6. Schalenkupplung nach einem der vorherigen Ansprüche, **dadurch gekennzeichnet, daß** die Distanzscheibe (8) aus Polyethylen besteht.

7. Schalenkupplung nach einem der vorherigen Ansprüche, **dadurch gekennzeichnet, dass** an mindestens einer Welle Mittel zur formschlüssigen axialen Lagesicherung der Welle in der Schalenkupplung vorgesehen sind und die Mittel durch einen Ring (9) gebildet sind, der teilweise in einer Ringnut (10) in der Mantelfläche der Welle (3) und teilweise in einer Ringnut (11) in den innenseitigen Kupplungsflächen (5) der Kupplungsschalen (2) einliegt.

8. Schalenkupplung nach Anspruch 7, **dadurch gekennzeichnet, daß** der Ring ein Sprengring (9) ist, der federnd in der Ringnut (10) der Welle (3) gehalten ist.

9. Verfahren zum Montieren einer Schalenkupplung nach einem der vorherigen Ansprüche zur drehfesten Verbindung von zwei fluchtenden Wellen (3), **gekennzeichnet durch** die folgenden Verfahrensschritte:
- die beiden Wellenenden werden in eine erste Kupplungsschale (2) eingebracht,
- die zweite Kupplungsschale (2) wird gegenüberliegend zu der ersten Kupplungsschale (2) auf die beiden Wellenenden derart aufgebracht, daß jeweils die zwei Trennflächen (7) der beiden Kupplungsschalen (2) einander paarweise unter Bildung jeweils eines Trennspaltes (6) in einem Abstand gegenüberliegen,
- in die beiden Trennspalte (6) wird jeweils mindestens eine Distanzscheibe (8) eingefügt, deren Dicke zumindest annähernd gleich der Dicke (S) des Trennspaltes (6) ist,
- die zweite Kupplungsschale (2) wird mittels Befestigungsmitteln gegen die erste Kupplungsschale (2) derart verspannt, daß die beiden Wellenenden kraftschlüssig an den innenseitigen Kupplungsflächen (5) der Kupplungsschalen (2) gehalten sind,
wobei die beiden Distanzscheiben (8) in dem Trennspalt (6) verbleiben.

## Claims

1. Split muff coupling for slip-proof connection of two aligned shafts, in particular a pump shaft and a motor shaft, comprising two coupling shells (2), each partially surrounding the two shaft ends and having two parting planes which, in the assembled condition, lie opposed in paired manner to the parting planes of the other coupling shell and at a distance from it, forming a gap, wherein the two coupling shells are clamped relative to each other such that the two shaft ends are held in frictional connection against internal coupling surfaces of the coupling shells, **characterised in that** in each of the two gaps (6) at least one spacing plate (8) made of plastics is inserted between the two parting planes (7), the thickness of the spacing plates being approximately equal to the thickness (S) of the gap (6).

2. Split muff coupling according to claim 1, **characterised in that** the thickness of the spacing plate (8) is larger by an amount in the range of 0.1 mm to 0.8 mm than the thickness (S) of the gap (6), and that, in the assembled condition of the coupling (1), the spacing plate (8) is compressed by this amount.

3. Split muff coupling according to claim 1 or 2, **characterised in that** the two coupling shells (2) are clamped together by means of screws, wherein the spacing plates (8) are designed ring-shaped and are each placed round a screw.

4. Split muff coupling according to claim 3, **characterised in that** the two coupling shells (2) are clamped together with a total of four screws, wherein two screws are arranged at each of the gaps (6) and only one spacing plate (8) is provided in each gap (6).

5. Split muff coupling according to one of the preceding claims, **characterised in that** the two shafts (3) have different diameters and the spacing plates (8) are only arranged in the region of the shaft (3) with the smaller diameter.

6. Split muff coupling according to one of the preceding claims, **characterised in that** the spacing plate (8) is made of polyethylene.

7. Split muff coupling according to one of the preceding claims, **characterised in that** means are provided on at least one shaft for form-fitting axial securing of the position of the shaft in the split muff coupling and the means comprise a ring (9) which partially lies within an annular groove (10) in the outer surface of the shaft (3) and partially in an annular groove (11) in the internal coupling surfaces (5) of the coupling shells (2).

8. Split muff coupling according to claim 7, **characterised in that** the ring is a spring ring (9) which is held elastically in the annular groove (10) of the shaft (3).

9. Method for assembling a split muff coupling according to one of the preceding claims for slip-proof connection of two aligned shafts (3), **characterised by** the following method steps:
- the two shaft ends are introduced into a first coupling shell (2),
- the second coupling shell (2) is placed on the two shaft ends opposing the first coupling shell (2) such that the two parting planes (7) of the two coupling shells (2) oppose each other at a distance in paired manner, each forming a gap (6),
- at least one spacing plate (8) is inserted into each of the two gaps (6), the thickness of said plates approximately equalling the thickness (S) of the gap (6),
- the second coupling shell (2) is clamped against the first coupling shell (2) such that the two shaft ends are held frictionally against the internal coupling surfaces (5) of the coupling shells (2), wherein the two spacing plates (8) remain in the gap (6).

## Revendications

1. Accouplement à coquille pour la liaison fixe en rotation de deux arbres alignés, en particulier d'un arbre de pompe avec un arbre de moteur, comprenant deux coquilles d'accouplement (2) entourant respectivement partiellement les deux extrémités d'arbre avec chacune deux surfaces de séparation qui, à l'état monté, sont opposées à écartement par paire aux surfaces de séparation de l'autre coquille d'accouplement respective en formant une fente de séparation, les deux coquilles d'accouplement étant serrées l'une contre l'autre de telle manière que les deux extrémités d'arbre sont maintenues à adhérence sur des surfaces d'accouplement du côté intérieur des coquilles d'accouplement,
**caractérisé par le fait**
**que** respectivement au moins un disque d'écartement (8) en matière synthétique est inséré entre les deux surfaces de séparation (7) dans les deux fentes de séparation (6), dont l'épaisseur est au moins approximativement égale à l'épaisseur (S) de la fente de séparation (6).

2. Accouplement à coquille selon la revendication 1,
**caractérisé par le fait**
**que** l'épaisseur du disque d'écartement (8) est supérieure d'une quantité de 0,1 à 0,8 millimètre à l'épaisseur (S) de la fente de séparation (6) et que le disque d'écartement (8), à l'état monté de l'accouplement, est comprimé de cette quantité.

3. Accouplement à coquille selon la revendication 1 ou 2,
**caractérisé par le fait**
**que** les deux coquilles d'accouplement (2) peuvent être serrées l'une contre l'autre au moyen de vis, les disques d'écartement (8) étant réalisés annulaires et disposés respectivement autour d'une vis.

4. Accouplement à coquille selon la revendication 3,
**caractérisé par le fait**
**que** les deux coquilles d'accouplement (2) peuvent être serrées l'une contre l'autre par l'intermédiaire d'au total quatre vis, deux vis étant respectivement disposées aux fentes de séparation (6) et seulement un disque d'écartement (8) étant disposé dans chaque fente de séparation (6).

5. Accouplement à coquille selon l'une des revendications précédentes,
**caractérisé par le fait**
**que** les deux arbres (3) présentent des diamètres différents et les disques d'écartement (8) ne sont disposés que dans la zone de l'arbre (3) de plus petit diamètre.

6. Accouplement à coquille selon l'une des revendications précédentes,
**caractérisé par le fait**
**que** le disque d'écartement (8) est constitué de polyéthylène.

7. Accouplement à coquille selon l'une des revendications précédentes,
**caractérisé par le fait**
**que** des moyens pour le maintien en position axiale à fermeture géométrique de l'arbre dans l'accouplement à coquille est disposé sur au moins un arbre et les moyens sont formés par une bague (9) qui est logée partiellement dans une gorge annulaire (10) dans la surface d'enveloppe de l'arbre (3) et partiellement dans une gorge annulaire (11) des surfaces d'accouplement (5) du côté intérieur des coquilles d'accouplement (2).

8. Accouplement à coquille selon la revendication 7,
**caractérisé par le fait**
**que** la bague est un jonc (9) qui est maintenu de manière élastique dans la gorge annulaire (10) de l'arbre (3).

9. -Procédé pour le montage d'un accouplement à coquille selon l'une des revendications précédentes pour la liaison fixe en rotation de deux arbres alignés (3),
**caractérisé par**
les étapes procédurales suivantes :
- les deux extrémités d'arbre sont mises en place dans une première coquille d'accouplement (2),
- la seconde coquille d'accouplement (2) est montée sur les deux extrémités d'arbre en étant opposée à la première coquille d'accouplement (2) de telle manière que respectivement les deux surfaces de séparation (7) des deux coquilles d'accouplement (2) sont opposées l'une à l'autre à écartement par paire en formant respectivement une fente de séparation (6),
- au moins un disque d'écartement (8), dont l'épaisseur est au moins approximativement égale à l'épaisseur (S) de la fente de séparation (6), est inséré respectivement dans les deux fentes de séparation (6),
- la seconde coquille d'accouplement (2) est serrée contre la première coquille d'accouplement (2) au moyen de moyens de fixation de telle manière que les deux extrémités d'arbre sont maintenues à adhérence sur les surfaces d'accouplement (5) du côté intérieur des coquilles d'accouplement (2),
les deux disques d'écartement (8) restant dans la fente de séparation (6).
